(19) Europäisches Patentamt

European Patent Office

Office européen des brevets

(11) **EP 1 026 603 A2**

(12) **EUROPEAN PATENT APPLICATION**

(43) Date of publication:
**09.08.2000 Bulletin 2000/32**

(51) Int. Cl.⁷: **G06F 17/30**

(21) Application number: **00300752.3**

(22) Date of filing: **01.02.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **02.02.1999 US 118429**
**24.08.1999 US 382127**
**22.12.1999 US 171743**

(71) Applicant:
**SmithKline Beecham Corporation**
**Philadelphia, PA 19103 (US)**

(72) Inventors:
• **Kohan, Mark,**
**Smithkline Beecham Pharmaceuticals**
**King of Prussia, Pennsylvania 19406 (US)**
• **Langer, Dennis Smithkline Beecham**
**Pharmaceuticals**
**King of Prussia, Pennsylvania 19406 (US)**

(74) Representative:
**Blakey, Alison Jane et al**
**Smithkline Beecham,**
**Corporate Intellectual Property,**
**Two New Horizons Court**
**Brentford, Middlesex, TW8 9EP (GB)**

(54) **Apparatus and method for depersonalizing information**

(57)     A computer implemented method allows an owner or provider of data that contains personal identifiers (data provider) to distribute that data to a data user in a depersonalized form, i.e., without revealing the identity of the individuals associated with the data. The data provider first separates the personal information from the other data to create two data sets. The personal identifying information is then provided to a Trusted Third Party (TTP). The TTP associates a unique identifier with the identifying information. This unique identifier replaces any data in the database that can be used to identify an individual, such as name, address or social security number. The TTP may also collect and store the personal identifying information so that it can process identifying information that it acquires in the future to determine if the unique identifiers generated by the data provider or by the TTP refer to the same individual. The data provider associates its own unique identifier or the identifier provided by the TTP with the other data to create depersonalized data that may be sent to a data user for analysis. In this manner, different records from one or more data providers that refer to a single individual can be matched by the data user, and the data provider is assured that no personal identifying information is distributed that would link an individual to a particular data record. The TTP transmits information that correlates unique identifiers from multiple data providers to a data user. Each data provider transmits the depersonalized data, including the unique identifiers to the data user. The data user correlates the information from the different data providers before analyzing the data.

Printed by Xerox (UK) Business Services
2.16.7 (HRS)/3.6

**Description**

BACKGROUND OF THE INVENTION

The present invention concerns the depersonalization of data associated with a particular individual and, in particular, a method for depersonalizing data from several sources without disclosing the personalized data.

In modern society, information relating to specific individuals is obtained by numerous organizations. Healthcare, financial and commercial organizations such as hospitals, laboratories, banks, insurance companies and retailers own data that could be used for research and development, marketing, and other business functions. There is, however a growing awareness for the necessity to maintain the privacy of the individuals connecting with the data. In particular, information regarding an individual's health or financial status may be extremely sensitive.

The analysis of this information often requires accessing data from multiple sources. For example, a study to determine the effectiveness of a particular medication may need to access records from a group of caregivers that prescribe the medication and from a corresponding group of pharmacies who prescribe the medication. The data owned by each of the data providers contains sensitive information that they may be unable to share with the data user who will be analyzing the information. While the various data providers could remove any identifying information from their data and provide only the medical data to the data user, the data user would not be able to correlate the data from the various sources and, thus, would lose information that would be needed in the analysis.

Therefore, a need has arisen for a method for obtaining personal data from multiple sources without the ability to identify the individual associated with the data but with the ability to associate individual data items from multiple sources as relating to a single individual.

SUMMARY OF THE INVENTION

The present invention relates to a computer implemented method and apparatus that allows an owner or provider of data that contains personal identifiers (data provider) to distribute that data to a data user in a depersonalized form, i.e., without revealing the identity of the individuals associated with the data. The data is otherwise unchanged. According to this method, a data provider separates the personal information from the other data to create two data sets. Only the personal identifying information is provided to a Trusted Third Party (TTP). The TTP generates an identifier that replaces any data in the database that can be used to identify an individual, such as name, address or social security number. The TTP may also collect and store the personal identifying information so that it can process identifying information that it acquires in the future to determine if the identifiers generated by the data provider or by the TTP refer to the same individual. The data provider associates the identifier provided by the TTP with the other data to create depersonalized data that may be sent to a data user for analysis. In this manner, different records from one or more data providers that refer to a single individual can be matched by the data user, and the data provider is assured that no personal identifying information is distributed that would link an individual to a particular data record.

DETAIL DESCRIPTION OF THE DRAWINGS

Figure 1 is a data flow diagram which is useful for describing how data is transferred among the various parties in the subject invention.

Figure 2 is a data flow diagram which illustrates one exemplary data depersonalization method.

Figure 3 is a data flow diagram that illustrates a second exemplary data depersonalization method.

Figure 4 is a data flow diagram that illustrates a third exemplary data depersonalization method.

Figure 5 is a data flow diagram that illustrates a fourth exemplary data depersonalization method.

Figure 6 is a data flow diagram that shows how multiple data providers may interact with a trusted third party to provide data that may be correlated by one or more data users.

Figure 7 is a block diagram that shows an exemplary computer configuration that may be used to implement the methods described in Figures 1 through 6.

Figure 8 is a flow-chart diagram of an exemplary method of Figure 6.

Figure 9 is a flow-chart diagram of an exemplary method of Figures 3, 4 or 5.

DETAILED DESCRIPTION OF THE INVENTION

Briefly, the present invention is a method and apparatus for processing sensitive information, that identifies a person, so that it may be used for anonymous data analysis. In the embodiments of the invention described below, a data provider, who owns a database containing sensitive information, divides the information into two parts, identifying information and other information. Using the identifying information, the provider generates, or has generated for it, a unique identifier that is linked to the identification information in the data provider's database. The data owner then tags the other information with this unique identifier and provides the tagged data to the data user. In each of the embodiments described below, the unique identifier is generated by or registered with a Trusted Third Party (TTP) who is able to match the identifying information received from the data provider to other identifying information that may already be in the TTP's database. A TTP is an entity that is under a contractual agreement to protect the identifying information from being disclosed, while maintaining and processing the data as necessary. By matching the identifying information, the TTP can link identifiers that are associated with data from multiple providers. These links may be provided directly to the data users to allow the data users to correlate data from multiple sources.

In the subject application, the word "depersonalizing" is used to describe the process by which the identifying information is removed from a user data record and replaced by a unique identifier. This term encompasses the terms "anonymizing" and "encoding" as they are used in the data processing arts. When data is anonymized, or encoded, all identifying information is removed from a record and a truly random identifier is assigned to represent the person. In addition, the term "depersonalizing" also encompasses a process by which an identifier that is not truly random is replaces the personal identifying information in a data record. An identifier of this type may be, for example, a hash function value or other value produced from a predetermines subset of the identifying information.

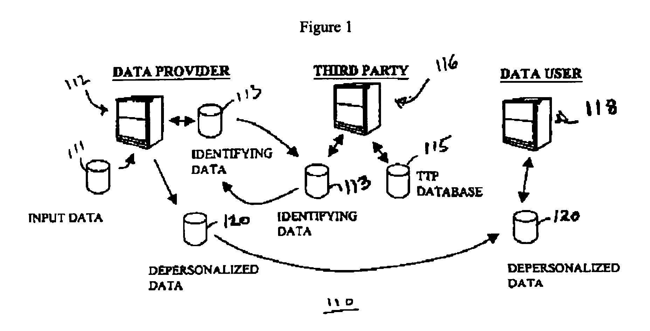

Fig. 1 shows a high-level data flow diagram of an exemplary information network, 110, with which the principles of the present invention may be used. In this exemplary embodiment, a data provider 112 owns or controls a database, 114, which, for example, is organized as a plurality of data records, each record containing one or more data fields. The data for each person may be kept in a single record or it may be linked across multiple records. Fields or portions of the fields in each record contain data that can be used to identify the individual, namely, personal identifiable attributes. These attributes include, for example, "name," "address" and "social security number". This is an exemplary and not exhaustive listing of the identifiable attributes.

In addition to the identifying information, the database contains other information about the individual. This "other information" may include, for example, medical information, financial data, purchase activity information or website navigation data. The identifying information may also include non-identifying demographic data, for example, the person's occupation, their postal code or their telephone area code. Depending on the type of "other information" in the database record, some of this demographic information may be classified as identifying information. For example, if the data record includes sensitive medical information then the entire postal code may be considered identifying information while a partial postal code, for example the first three digits of a five-digit zip code, would not be identifying information.

Because the type of information that may be considered to be identifying information varies with the type of data stored in the database, the data provider is best able to decide which information in the person's record is considered to be identifying information and which information may be passed on to a data user for analysis. The data provider 112 creates a file 113 from the database, each record of the file contains the fields having the identifiable attributes from each record in the database. The file 113 is sent to a Trusted Third Party (TTP) 116. The TTP 116 creates a unique identifier to be associated with the identifying attributes. This identifier can be alphabetic, numeric, alphanumeric, symbolic and the like. If the data in the database is sensitive, the unique identifier may be generated in a totally random fashion and in a manner that cannot be reversed, for example by taking the instantaneous value of the system clock register. If the data in the database is less confidential, the unique identifier may be generated from the identifying information by a reversible process.

To generate the unique identifier, the TTP 116 first compares the identifying data from a record in the file to records in an internal database 115 that contains identifying information which has previously been processed by the TTP. Each record of this database also contains a source identifier that identifies the data provider, who owns the data associated with the identifying record, and links to other records in the database that contain matching identifying information. If the TTP finds a match in its internal database and if the source of the previous data is the supplier of the current data then the TTP 116 uses the previously assigned unique identifier as the identifier for the new data. If the source of the previous data was not the supplier of the current data or if the TTP does not find a match for the data in its database a new unique identifier is generated for the data set. Each unique identifier is specific to the data provider.

By assigning a different unique identifier to represent the same person for respectively different data providers, the TTP ensures that one data provider can not identify any data owned by another provider. Because each data provider has identifying information for all of the people in its database, if the same unique identifier were used for multiple providers, one provider could link its identifying information to depersonalized data that is owned by a different data supplier. This may result in a breach of confidentiality for that data.

After retrieving or creating the unique identifier, the TTP stores it into a field of the appropriate record in the file 113. When all of the records have been processed, the TTP 116 returns the file 113 to the data provider 112. The data provider creates a new database 120 containing the records of the original database from which the identifiable attributes are removed and replaced with the unique identifier. The database 120 containing the random identifiers along with the data not determined to be personal identifying attributes are then sent to the data user 118. The data user now has useful data that has been depersonalized so that the data user does not have the ability to identify an individual that matches a particular set of data.

For sensitive data, it is desirable for the TTP 116 to protect the relationship between the personal identifying information and the unique identifiers. For this type of information, the random identifiers provided by the TTP 116 are desirably totally random; there should be no way for anyone other than the data provider 112 or the TTP 116 to relate the identifier with the individual. Only in the circumstance where the data provider 112 has authority to grant and grants specific permission should the data user be able to obtain identifying information for any data in its possession. In this exemplary embodiment, an individual may have multiple records within the database owned or controlled by the data provider. In addition, as set forth above, the TTP 116 may have data on one person from multiple data providers. In order to link newly received personal data to data already in the database 115, the TTP 116 executes a matching algorithm on the data that it receives. In any scenario in which a data user requires data from multiple providers, a TTP 116 is necessary.

Many matching algorithms may be used in the present invention. Exemplary matching algorithms are disclosed in a paper by M. A. Jaro entitled "Probabilistic Linkage of Large Public Health Data Files" <u>Statistics in Medicine</u>, vol. 14, John Wiley, pp 491-498 (1995) and in an article by I. P. Fellegi et al. entitled "A Theory of Record Linkage" <u>Journal of the American Statistical Association</u>, vol. 64, No. 328, pp 1183-1210 (1969). The simplest matching algorithm is a deterministic match. By this algorithm, individual data fields from the newly received personal data are compared to corresponding fields in the data from the database 115. If all of these fields match, then the newly received data is almost certainly for the person whose data is in the database. An exemplary set of fields that may be used for a deterministic match are Last Name, First Name, Address and Social Security Number. Other fields such as Telephone Number and Birth Date may also be used.

Deterministic matching techniques may not identify all matches or even a large percentage of matches between two databases because of incomplete data or transcription errors. One method for enhancing deterministic matching techniques is to employ probabilistic techniques to determine the likelihood that two dissimilar fields match. Another technique is to normalize the data, for example by expanding abbreviations and nicknames before performing the deterministic match or applying the probabilistic techniques. Yet another method is to analyze dissimilar fields in otherwise matching records by their edit distances to identify possible errors in transcription.

One exemplary data matching technique is presented below. This method is disclosed in copending U.S. patent application No. 60/165,121 filed 15 November 1999 and is one of many possible matching methods that may be used. The materials disclosed therein are incorporated by reference herein to the extent they are material to the understanding and practice of this invention. The exemplary matching technique comprises three steps, i) data standardization, ii) weight estimation, and iii) data comparison.

Definitions

The following definitions and abbreviations are used for this exemplary embodiment: μ-Probability: The probability that any random element pair will match by chance, as given by equation (1).

$$\mu = \frac{n_{match}}{n_{A*B}} \tag{1}$$

ρ-Probability: The reliability of the data element. If the Element Error Rate $\geq$ .99 then ρ=1—$EER$; Else ρ=.99—$EER$

Agreement: A condition such that a given element pair matches exactly and both elements are known

$$A_{e_1} = B_{e_1}$$

Agreement Weight: The weight assigned to an element pair when they agree during the record matching process as shown in equation (2).

$$AW = -\log_2\left(\frac{\rho}{\mu}\right) \tag{2}$$

Cartesian Product: The set of ordered pairs $A*B=\{(a,b)|a\in A\wedge b\in B\}$

Disagreement: A condition such that a given element pair does not exactly match and both elements are known

$$A_{e_i}\neq B_{e_i}$$

Disagreement Weight: The weight assigned to an element pair when they disagree during the record matching process as shown in equation (3).

$$DW = \log_2\left(\frac{1-\rho}{1-\mu}\right) \tag{3}$$

Element Error Rate: The proportion of element pairs where at least one element is unknown, e.g., null, as shown in equation (4).

$$\varepsilon = \frac{n_{null}}{n_{A*B}} \tag{4}$$

Frequency Table: Summary of the number of times, and percentage of total different values of a variable occur

Mean: Arithmetic average, as given in equation (5).

$$\overline{x}_i = \frac{1}{n}\sum_{i=1}^{n} x_i \tag{5}$$

No Decision: A condition such that a given element pair where either one or both of the elements is unknown.

Random Number Assignment: In the exemplary embodiment of the invention, every record in the data set is assigned a random number such that $\nu$ blocks of approximately 1500 are created $R = int[(U * P)+1]$ where R is the resulting Random Number, U is the Upper Bound (defined below) and P is a random function that returns a value between 0 and 1. In the exemplary embodiment of the invention, P may be a pseudo random number generator.

Threshold: The threshold utilized in probabilistic matching is a binit odds ratio with a range of $-\infty\geq x\geq\infty$.

Upper Bound: Number of strata such that the data set is divided into approximately equal rows of 1500 as shown in equation (6).

$$\upsilon = int\left(\frac{\text{Number of Records in Data Set}}{1500}\right) \tag{6}$$

As regards the computer and machine language used in this process, just about any piece of hardware capable of executing a fairly large number of calculations in short order will fill the bill. Any current state-of-the-art PC or server could be used. As for the operating system, UNIX is preferred, but Windows 98 or NT for Windows or the like could be used. The source code can be written in any language, tough Java if preferred.

Data Standardization

The first step of this process involves the standardization of data in an input file. This standardization is required for increased precision and reliability. The input file can contain any number of variables of which one or more are or may be unique to a particular data source such as an individual. Examples of useful variables are: member identifier, drivers' license number, social security number, insurance company code number, name, gender, date of birth, street address, city, state, postal code, citizenship. In addition, some identifiers can be further distilled down into their basic, or atomic, components. For example, a name may be broken down into atomic components of first name, last name and middle initial.

During the standardization process, all character data is preferably transformed to a single case, and all abbreviations or nick-names are transformed to their longer forms. For example all letters may be transformed to uppercase. So for instance, first names are standardized to uppercase, e.g., {BOB, ROB, ROBBY} = ROBERT. Common names for cities and streets may be transformed to the postal code, e.g., in the U.S. to United States Postal Service standard. In the latter instance this can be performed using industry standard CASS certified software.

Weight Estimation

A fundamental component of this exemplary algorithm is the process of estimating the agreement and disagreement weights necessary for the probabilistic function. Weights are calculated based in probabilities of chance agreement using an iterative bootstrap technique.

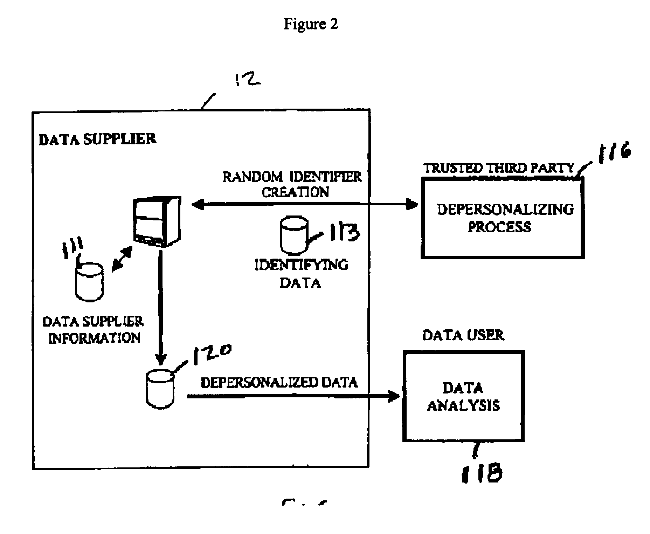

The first step in the exemplary weight estimation process is to determine the number of strata required such that the data set can be divided into approximately equal blocks of 1500 rows (Fig. 2 - 201-219), see equation (6).

$$\upsilon = \text{int}\left(\frac{\text{Number of Records in Data Set}}{1500}\right) \tag{6}$$

The source file is then scanned and the records are assigned a random number between 1 and U. A data matrix is created containing a Cartesian product of records with a random number of 1 assigned. The resulting matrix is then scanned. Each element pair within each record pair is assessed and assigned a value as shown in equation (7).

$$e_n = \begin{cases} 1 \text{ if } A_{e_n} = B_{e_n} \text{ (Agreement)} \\ 0 \text{ if } A_{e_n} = \textit{Null} \text{ and/or } B_{e_n} = \textit{Null} \text{ (No decision)} \\ -1 \text{ if } A_{e_n} \neq B_{e_n} \text{ (Disagreement)} \end{cases} \tag{7}$$

where

$$A_{e_n}$$

is the nth element from record A

Once the matrix has been fully assessed, percentages for

$$e_n$$

each are tabulated and stored. This process may be repeated for a number (e.g. 15) of iterations.

Mean percentages of Agreements and No Decisions are calculated for each data element. The $\rho$ probability, or the reliability, for each data element is then calculated, see equation (8).

$$\text{let } \varepsilon = \overline{x}_{\textbf{Percent No Decision}}$$

$$\rho = \begin{cases} \text{if } \varepsilon \geq .99 \text{ then } 1 - \varepsilon \\ \text{else } .99 - \varepsilon \end{cases} \tag{8}$$

The $\mu$ probability, or the probability that element n for any given record pair will match by chance, is calcu-lated see equation (9).

$$\mu = \bar{x}_{Percent\ Agreement} \tag{9}$$

From the $\rho$ and $\mu$ probabilities, the disagreement and agreement weight formula may calculated employing equations (10) and (11) respectively.

$$Disagreement = \log_2\left(\frac{1-\rho}{1-\mu}\right) \tag{10}$$

$$Agreement = \log_2\left(\frac{\rho}{\mu}\right) \tag{11}$$

Unique Identifier Assignment

The final stage of this process is the action of uniquely identifying entities within the input data set.

Each record from the input file is evaluated against the reference database 115 to determine if the entity represented by the data has been previously identified using a combination of deterministic and probabilistic matching techniques. If it is judged that the entity is already represented in the reference set, the input record is assigned the unique identifier (UID) from the reference record that it has matched against. If it is judged that the entity represented by data is not yet in the reference set, a new UID is randomly generated and assigned. Random values may be generated using many different algorithms. As set forth above, if the data is sensitive, it is desirable that the random identifier be truly random, generated, for example, using the instantaneous value of the system clock register. For less sensitive data reversible methods may be used. It is desirable, however, for the identifier to be unique; only one person should be associated with any one identifier. This random identifier may be numeric, alphanumeric, or symbolic (e.g. a spatial pattern or hologram).

After the UID assignment occurs, the input record is evaluated, in its entirety, to determine if the record is a unique representation of the entity not already contained in the reference table. If it is a new record, then it is inserted into the reference database 115 for fixture use.

Deterministic Matching Technique

The exemplary deterministic matching technique employs simple Boolean logic and is applied after the data has been standardized. Two records are judged to match if certain criteria are met, such as the following:

First Name Matches Exactly
Last Name Matches Exactly
Date of Birth Matches Exactly
Social Security Number OR Member Identifier Matches Exactly

If two records satisfy the criteria for deterministic matching, no probabilistic processing occurs. However, if no deterministic match occurs, the input record is presented for a probabilistic match.

Probabilistic Matching Technique

The first step in the probabilistic matching process is to build a set of candidate records from the reference table based on characteristics of specific elements of the input record. This process is referred to as blocking, the set of candidate records is referred to as the blocking table. All data sets do not use the same characteristics, the elements used in this process are determined through data analysis. It is suggested, however, that the blocking variables include those elements that are somewhat unique to an individual, e.g., social security number, or a combination of date of birth and last name. Upon completion of the construction of the blocking table, each element for each candidate record is compared against its corresponding element from the input record. See equation (12) for the scoring mechanism.

$$w_n = \begin{cases} Agreement\ Weight\ if\ A_{e_n} = B_{e_n} \\ 0\ if\ A_{e_n} = Null\ and/or\ B_{e_n} = Null \\ Disagreement\ Weight\ if\ A_{e_n} \neq B_{e_n} \end{cases} \qquad (12)$$

where

$$A_{e_n}$$

is the nth element from record A

A composite weight is then calculated for all candidate records, see equation (13).

$$W = \sum_{i=1}^{N} w_i \qquad (13)$$

The candidate record with the highest composite weight is then evaluated against a predefined threshold. If the weight meets or exceeds the threshold, the candidate record is judged to match the input record. If the weight does not exceed the threshold, it is assumed that the input record represents an entity not yet included in the reference set.

The exemplary matching technique does not attempt to determine whether two fields that disagree represent the same data. If, for example, because of a transcription error, a social security number of 123 45 6789 were recorded as 123 45 6798, the algorithm set forth above would indicate disagreement. One alternative enhancement to the algorithm set forth above may be to employ some measure of similarity such as Edit Distance between similar fields. For example, the social security numbers described above have an edit distance of one because a digit substitution of the last two digits would produce the correct result. This measure of similarity may be employed, for example, as a part of the probabilistic process or as a post processing step to confirm that the result of the probabilistic process is correct.

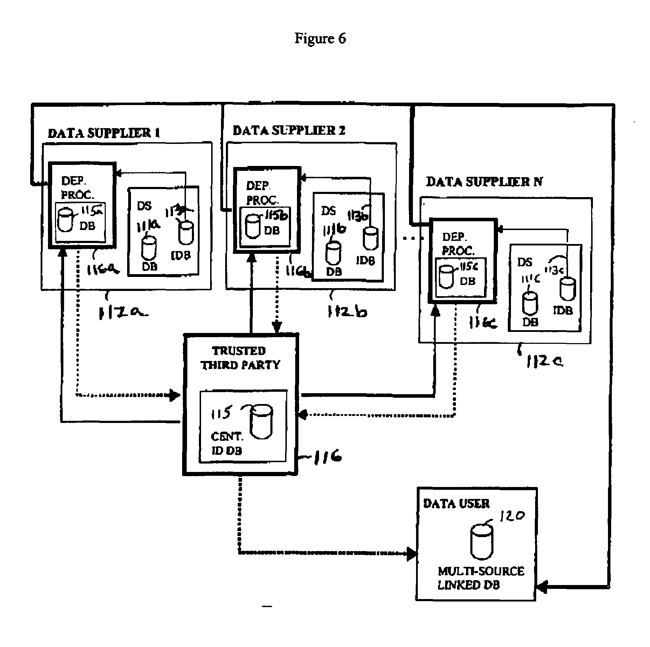

Figures 2, 3, 4 and 5 show alternative embodiments for employing a TTP 116 in the anonymous transfer of sensitive information from a data provider 112 to a data user 118. Although each of the embodiments includes a single data provider, it is contemplated that, except for Figure 2, all embodiments may be expanded to include multiple independent information providers. The embodiment shown in Figure 2 may include multiple information sources from a single information provider. One implementation that illustrates multiple information providers is described below with reference to Figure 6.

In the embodiment shown in Figure 2, a data supplier 112 processes input information in the database 111 to separate the personal data 113 from the other data in the database. The personal data is sent to the TTP 116 for processing, as described above. The TTP 116 returns the personal data with each record now including a unique identifier. The data supplier 112 then matches the unique identifier to the data in the input database 111 and separates the other information and the associated unique identifiers into a depersonalized database 120. This depersonalized database is then sent to the data user 118 for analysis.

In the exemplary embodiment shown in Figure 2, there is no direct communication between the TTP 116 and the data user 118. This embodiment may be used where a single data provider includes multiple data sources and needs to match the data from the various data sources. One example of this is a hospital environment in which billing records, patient treatment records, pharmacy records, radiology records and therapy records may be kept separately, perhaps by separate contractors. The hospital may want to match these records internally for its own use and may want to provide the data to an external data user. In this embodiment, the TTP 116 matches the records from the various data sources and provides a single unique identifier for each person among all of the sources.

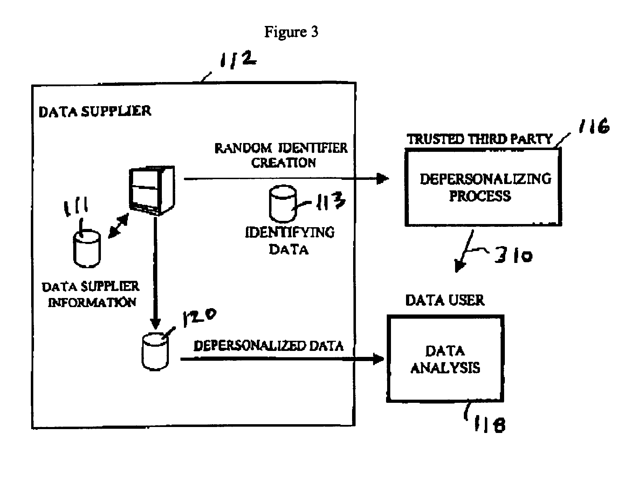

The exemplary embodiment shown in Figure 3 differs from that shown in Figure 2 in that the TTP 116 does not communicate the unique identifier to the data provider. In this embodiment, the provider 112 processes its input database to generate two databases. One database, 113 has only identifying information and the other database has only the other information. The data provider assigns common identifiers to corresponding records in the two databases. These identifiers may be as simple as a record number or as complex as a random identifier for a particular individual. In the first instance, the data provider makes no attempt to link multiple records for the same person. In the second instance, the data provider has already linked the records and has placed the unique identifier for the person into both the records of the database 113 and the corresponding records of the database 120. Where the data provider has assigned unique identifiers, the identifiers may be random, pseudo random or reversible. It is noted, however, that reversible unique identifiers may only be used in situations where at least some personal information may be disclosed.

The database 113 is provided to the TTP 116 where it is processed, as described above, to match records having the same identifying information to each other and to records in the internal database (not shown) of the TTP 116.

At the same time that the identifying data is sent to the TTP, the database 120 containing the other data is sent to the data user 118. After receiving the database 120, the data user waits to receive correlating data 310 from the TTP 116. This correlating data matches the record identifiers or unique identifiers from the data provider to unique identifiers generated by the TTP. The data user adds the unique identifiers generated by the TTP 116 to the appropriate records of the database 120 and processes the other information using the TTP unique identifiers.

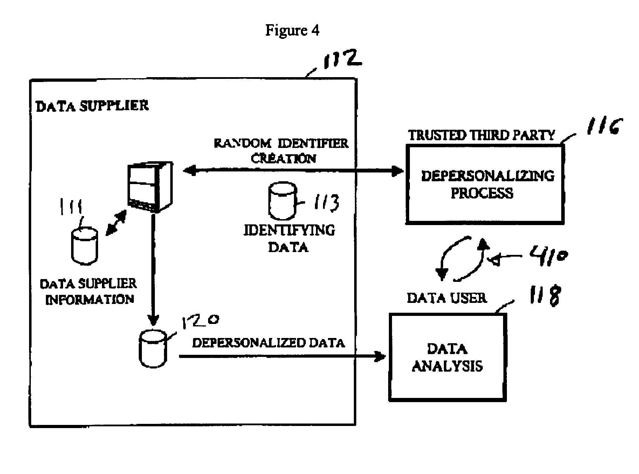

When the system shown in Figure 3 is used with multiple data providers, the correlating data 310 provided by the TTP 116 may also include a table indicating correspondence among the unique identifiers or record numbers provided by the multiple data providers. Using this information, the data user 118 may associate data from the multiple providers before performing the data analysis. The system shown in Figure 4 is similar to that described above with reference to Figure 2 except that, in the system of Figure 4, there is communication between the TTP 116 and the data user 118. In Figure 4, the data supplier sends the identifying information to the TTP 116 who matches the data, adds unique identifiers and sends the identifying information with the unique identifiers back to the data supplier 112. The data supplier then copies the unique identifiers from the identifying information records to the associated other information records and provides the other information records to the data user 118. The data user 118 then receives correlating data (410) directly from the TTP 116. In this instance, the correlating information includes unique identifiers from other data suppliers that correspond to the unique identifiers in the depersonalized data 120 that is provided by the data supplier 112.

In the system shown in Figure 4, this correlating data 410 may be provided by the TTP 116 to the data user 118 at the request of the data provider 112 or it may be requested by the data user 118. When the data is requested by the data provider, the TTP provides correlating information for all of the data suppliers in its database. When the data user asks for data, however, it requests information from only those data providers from which it receives data.

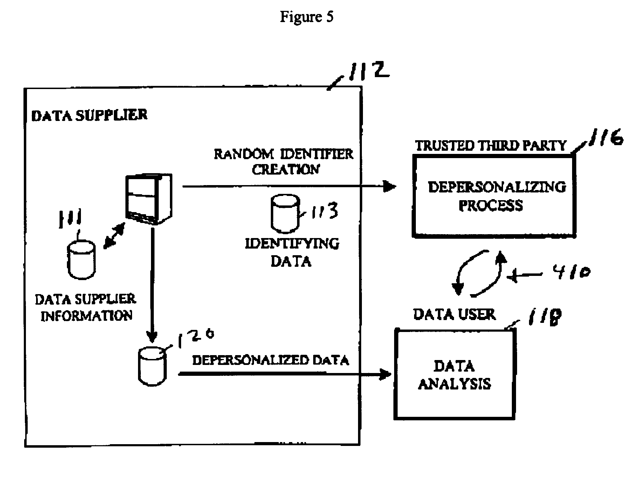

Figure 5 shows a system that is similar to the system shown in Figure 3 except that, rather than send all correlating data to the data user, the TTP 116 sends correlating data to the data user 118 only in response to a specific request. As with the system shown in Figure 4, that request may be for only those data providers who supply data to the data user 118.

In any of the systems shown in Figures 1 through 5, it may be necessary for the data user to identify the person whose data is being evaluated. If, for example, the data user 118 is processing medical data and identifies a life-threatening condition, the data user may need to notify the individual. In this instance, the data user may ask the data supplier for the identifying information. In situations where the unique identifiers being used by the data user do not match the identifiers held by the data provider, the data provider 112 may then authorize the TTP 116 to divulge the information to the data user 118.

Figure 6 illustrates another exemplary embodiment using the principles of the present invention. In this embodiment, The Trusted Third Party 116 provides each data provider 112a, 112b and 112c with software and/or hardware that performs the depersonalizing process and a supporting database 115a, 115b and 115c that holds the identified depersonalized data. Each database 115a, 115b and 115c contains individual identifiable attributes and individual identifiers for the respective data provider 112a, 112b and 112c obtained from a central database 115 owned or controlled by the TTP 116. The central database 115 is populated with information obtained from authorized sources of such information during past processing. For each record the data provider wishes to supply to a data user 118, the data provider extracts the identifying fields for the record and inputs them into the depersonalizing process. The depersonalizing process assigns the random identifier by matching the information held by the data user with information previously stored in the database provided by the Trusted Third Party. If no matching data is found in the respective database 115a, 115b and 115c, a unique and possibly random identifier is assigned and provided as output from the process. If a match with previously depersonalized data is encountered, the unique identifier assigned initially is provided as output from the process. The data providers 112a, 112b and 112c substitute the unique identifiers for the individual identifiable attributes in the record to create respective depersonalized records. The data suppliers then send the depersonalized records to the data user 118.

In order to enable the linking of multiple sources of depersonalized data, each data provider 112a, 112b and 112c supplies, to the TTP 116, a file containing the identifying data and the unique identifiers assigned by the data provider's depersonalizing process 116a, 116b and 116c. The TTP correlates these files to identify matches among the identifying information records provided by the respective data providers and stores the unique identifiers, with indications of any correlation, within the central database. When authorized by the data provider, the TTP may supply information to the data user showing the random identifiers from any of the data provider that relates to the same individual, thus allowing the data user to create a linked depersonalized database 120.

In some instances, a data provider 112a will not supply the identifying data to the TTP 116. In this instance, the TTP 116 will maintain a central database that is pre-populated with data from public sources, such as telephone directories, and will supply the matching algorithms to the data provider. The TTP 116 will receive only those files from a data supplier that have been previously matched with the TTP 116 database. It is apparent that correlation of data within certain groups of individuals who do not exist in the public databases, such as children, may be excluded from the data user. However, the process favors false negative correlation over false positive.

A practitioner skilled in the art would recognize the many permutations of the basic concept of the present invention, that is, the use of a trusted third party with a data provider and a data user to depersonalize data as the data passes from provider to user. The embodiments described above are exemplary in nature, and do not constitute an exhaustive listing of the various ways this invention may be implemented.

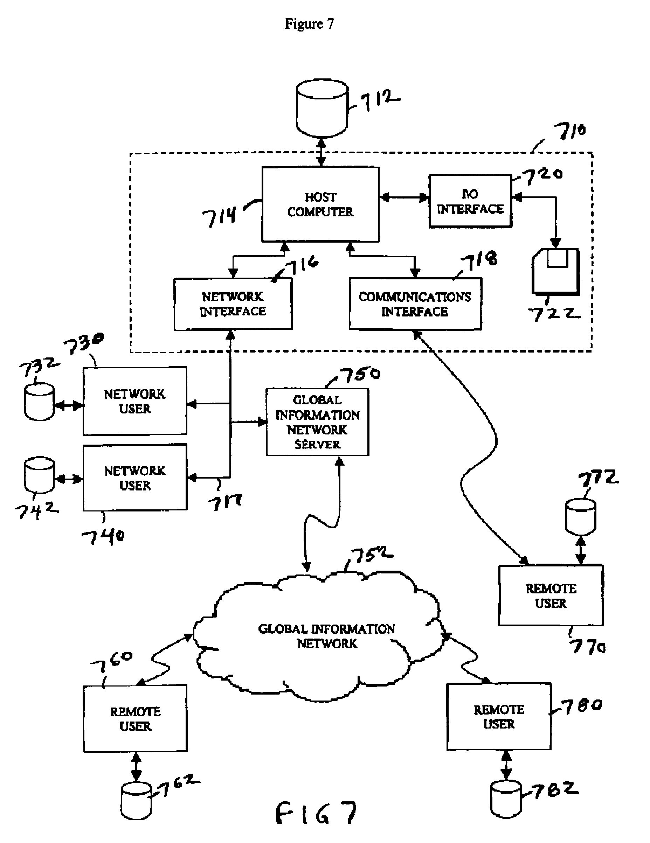

Figure 7 is a block diagram of an exemplary physical implementation of any of the information networks shown in Figures 1 through 6. The exemplary system is linked by a local area or wide area network 716 which may also be connected to a global information network, such as the Internet, by a direct communications interface 718 and by removable media 722. The exemplary system shown in Figure 7 includes six processing systems, 710, 730, 740, 760, 770 and 780. Each of these systems may include any of the communication interfaces shown for processing system 710. Each of the systems 710, 730, 740, 760, 770 and 780 has an associated database 712, 732, 742, 762, 772 and 782. The databases maintained by the data provider, data user and TTP may reside on any commercially available host computer, as currently known in the art.

The exemplary processing system 710 includes a host computer 714 and a network interface 716 by which the host computer 714 may communicate with other data processing systems via a local area network, a wide area network or a global information network. As shown in Figure 7, the host computer 714 communicates with the processing systems 740 and 730 via a local area network (LAN) 717. Computer 714 also uses the LAN 717 to communicate with a global information network server 750 and, through the server 750 and global information network 752, to remote users 760 and 780. In addition to the network interface, the host computer 714 of the data processing system 710 includes a communications interface 718, for example, a modem, through which the processing system 710 may communicate with the remote user 770. The processing system 710 also includes an input/output (I/O) processor 720 which is coupled to a removable media device 722, for example a diskette drive, through which the host computer can communicate with any other computer system that does not have a direct or indirect data communication path with the host computer 714.

Each host computer may contain one or more processors (not shown), memory (not shown), input and output devices (not shown), and access to mass storage (not shown). Each processing system may be a single system or a network of computers, as currently known in the art. The data providers, TTP and data users may exchange data over computer network such as LAN 717 or by physically transferring data on removable media 722 from location to location. The system may also be implemented across a global information network such as the Internet. The host computer and the global information network may also communicate with a plurality of remote users.

The term "database" may be broadly interpreted to mean any database using records and fields, or their equivalent. The method is not limited by the high-level language used to code the data or the language used to code the programs which implement the required data processing. It is contemplated that the subject invention may be practiced in computer software executed by the data provider(s) 112, trusted third party 116 and data user 118. This computer software may be implemented on a carrier, such as a diskette, CD-ROM, DVD-ROM or radio frequency or audio frequency carrier wave.

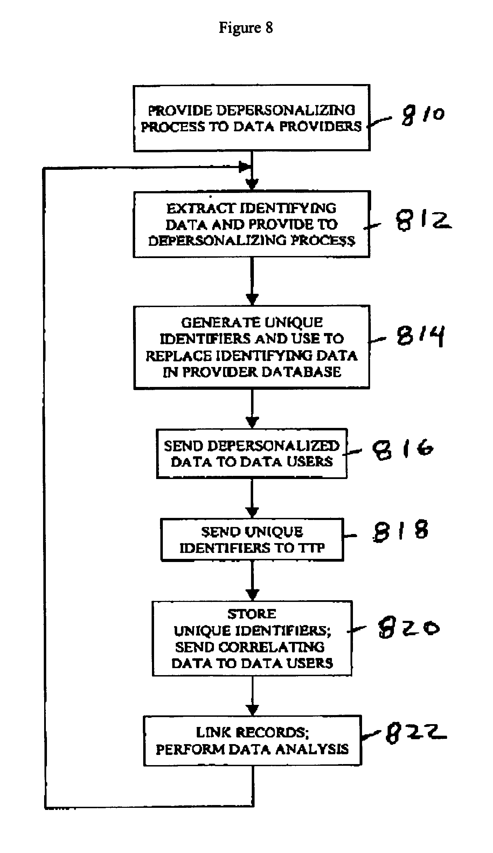

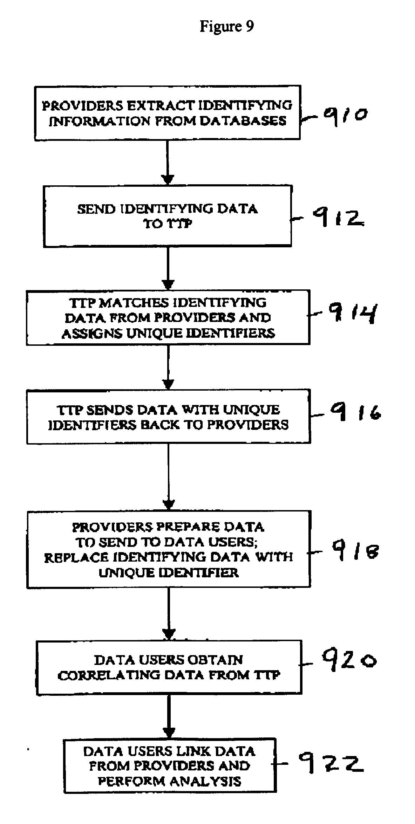

Figures 8 and 9 are flow-chart diagrams which illustrate exemplary embodiments of the invention. Figure 8 illustrates a process such as that shown in Figure 6 and Figure 9 shows a process such as that shown in Figures 3, 4 or 5.

In Figure 8, at step 810, the TTP 116 provides the encoding process and encoding database to two retailers, retailer 112a and retailer 112b. The retailers implement the process and database within their company. The databases 115a and 115b provided by the TTP 116 in this exemplary embodiment of the invention are pre-populated with information supplied from the TTP central database 115. The information provided does not include any unique identifiers.

At step 812, each of the retailers 112a and 112b extracts the individual demographic attributes and individual identifiers from each data record it wishes to sent to the data user 118, in this example, a marketing agency. For each record, the information is processed through TTP's supplied encoding process. The encoding process, at step 814 assigns a unique identifier to each record. Next, at step 814, the retailers 112a and 112b create the depersonalized data by replacing the individual demographic attributes and individual identifiers with the single unique identifier provided by the encoding process and send the depersonalized data to the marketing agency 118.

Next, at step 818, the retailers 112a and 112b send, to the TTP 116, the unique identifiers assigned for each record where they encountered a match during the encoding process execution. The TTP 116, at step 820 stores the unique identifier assignment information provided by the retailers 112a and 112b in its central database 115. Also at step 820, the TTP 116 sends the unique identifiers for the retailers 112a and 112b, which link to the same individual, as the correlating information to the marketing agency 118.

At step 822, the marketing agency links the data using the correlating information and performs its marketing study. This study is performed without the ability to identify any individual person. As illustrated by the arrow from block 822 to block 812, the process is iterative. Periodically, the TTP 116 sends updates to the encoding process and database to the retailers 112a and 112b. These updates result from updates / additions to the encoding process central database obtained by TTP 116. After processing these updates, the retailers 112a and 112b send back to the TTP 116 all unique identifiers that were previously assigned by the retailers to the newly supplied information.

It is noted that in this embodiment of the invention, the retailers 112a and 112b never provided any identifiable retail information. The retail data provided by the retailers to the marketing agency had no individual identifiable attributes. Thus, the marketing agency 118 never knew the identity of the actual individuals. Nonetheless, the marketing agency 118 was able to use the power of the retailer's information to enhance marketing study capability.

In the exemplary embodiment of the invention shown in Figure 9, a manufacturer 118 wishes to use the healthcare information of three local healthcare providers to identify the health habits of a specific disease state. Three data providers 112, ProviderA, ProviderB and ProviderC have information which identifies the individual (for example: Member number, social security number, name, etc.). The manufacturer 118, ProviderA, ProviderB and ProviderC contractually authorize a Trusted Third Party (TTP) 116 to encode the healthcare data using the healthcare data encoding process shown in Figure 9.

At step 910 of this process, ProviderA, ProviderB and ProviderC each extracts the individual identifiable information from their internal databases 111 of healthcare records into a file 113. At step 912, ProviderA, ProviderB and ProviderC send the files to TTP 116.

At step 914, the TTP 116 identifies each individual using ifs matching process and assigns an Encoding Key to each record. At step 916, the TTP 116 sends the files with the corresponding Encoding Keys back to ProviderA, ProviderB and ProviderC. Next, at step 916, ProviderA, ProviderB and ProviderC replace the individual attributes for each record they wish to send to the manufacturer 118 with the encoding key received from the TTP 116. Also at step 918, ProviderA, ProviderB and ProviderC send the encoded healthcare information files to the manufacturer 118. At step 920, the manufacturer receives the encoded healthcare information files and obtains the correlating data from the TTP 116. Finally, at step 922, the manufacturer 118 links the data from ProviderA, ProviderB and ProviderC and completes its study. It is noted that this study is completed without the manufacturer being able to identify any person.

While the invention has been described in terms of a number of exemplary embodiments, it is contemplated that it maybe practiced as described above with variations that are within the scope of the appended claims.

**Claims**

1. A method of distributing data records, which include identifying information fields and other data fields, in an information network comprising a data provider, a data user and a trusted third party, wherein the identifying information in each record identifies a person, said method comprising the steps of:

   a) separating the identifying information fields from the other data fields for each data record to generate identifying records;
   b) transferring a copy of the identifying records to the trusted third party;
   c) associating, by the trusted third party, each of the identifying records with a unique identifier, wherein a respectively different unique identifier is assigned to each person identified by one or more of the identifying records;
   d) transferring, by the trusted third party, the unique identifiers to the data provider;
   e) associating, by the data provider, the other data fields with the respective unique identifiers to form depersonalized data; and
   f) transferring, by each of the data providers, the depersonalized data to the data user.

2. A method according to claim 1 wherein the step of associating the identifying records by the trusted third party includes the step of generating a random identifier that cannot be used to recover any of the identifying information fields as the unique identifier.

3. A method of distributing data records, which include identifying information fields and other data fields, in an information network comprising a plurality of data providers, a data user and a trusted third party, wherein the identifying information in each data record identifies a person, said method comprising the steps of:

   a) separating, by each of the data providers, the identifying information fields from the other data fields for each data record to generate identifying records;

b) transferring, by each of the data providers, a copy of the identifying records to the trusted third party;

c) associating, by the trusted third party, each of the identifying records, with a unique identifier, wherein a respectively different unique identifier is assigned to each individual person identified by one or more of the identifying records;

d) transferring, by the trusted third party, the unique identifiers to the respective data providers from which the identifying records used to generate the unique identifiers were received;

e) associating, by each of the data providers, the other data fields with the respective unique identifiers to form depersonalized data; and

f) transferring, by each of the data providers, the depersonalized data to the data user.

4. A method according to any one of claims 1 to 3 wherein the step of associating, by the trusted third party, each of the identifying records, with a unique identifier, includes the step of generating a random identifier that cannot be used to recover any of the identifying information fields as the unique identifier, wherein when the identifying information fields provided by more than one of the plurality of data providers corresponds to one person, respectively different unique identifiers are generated for each of the more than one information providers.

5. A method according to any one of claims 1 to 4 wherein the step of associating, by the trusted third party each of the identifying records, with a unique identifier further includes the steps of:

a) recording, by the trusted third party, a correlation of each person for whom multiple unique identifiers are assigned to form correlating information; and

b) transferring, by the trusted third party, the correlating information to the data user.

6. A method according to claim 5 wherein the step of transferring, by the trusted third party, the correlating information to the data user, includes the steps of

a) receiving, from the data user, a request for correlating information for specific ones of the plurality of data providers; and

b) transferring the correlating information for only the specific ones of the plurality of data providers.

7. A method of distributing a plurality of data records, which include identifying information fields and other data fields, in an information network comprising a plurality of data providers, a data user and a trusted third party, wherein the identifying information in each data record identifies a person, said method comprising the steps of:

a) generating, by each of the data providers, a plurality of first unique identifiers from the identifying information fields of the plurality of data records;

b) transferring, by each of the data providers, a copy of the identifying information fields from each of the plurality data records and a respective copy of each of the plurality of unique identifiers, as a respective plurality of identifying records, to the trusted third party;

c) transferring, by each of the data providers, a copy of the other data fields from each of the plurality data records and a respective copy of each of the plurality of first unique identifiers, as a respective plurality of data records, to the data user;

d) associating, by the trusted third party, each of the identifying records, with a second unique identifier, wherein a respectively different second unique identifier is assigned to each individual person identified by one or more of the identifying records;

e) transferring, by the trusted third party, the first unique identifiers and the second unique identifiers to the data user; and

f) associating, by the data user, the other data records provided by the data provider with the unique identifiers provided by the trusted third party.

8. A method of processing and distributing a plurality of data records, wherein each of the plurality of data records contains information used to identify a person, by a trusted third party, said method comprising the steps of:

a) receiving, from a plurality of data providers, a copy of the plurality of identifying records;

b) associating each of the identifying records, with a unique identifier, wherein a respectively different unique identifier is assigned to each individual person identified by one or more of the identifying records;

c) matching records associated with a particular person among the identifying records provided by the plurality of data providers, to generate the second unique identifier which is the same for all identifying records provided by the plurality of data providers; and

d) transferring the unique identifiers to the respective data providers from which the identifying records used to generate the unique identifiers were received.

9. A carrier containing a set of instructions for causing a general purpose computer network comprising a data provider, a data user and a trusted third party, said network accessing a plurality of data records which include identifying information fields and other data fields, wherein the identifying information in each record identifies a person, to perform the following steps:

a) separating the identifying information fields from the other data fields for each data record to generate identifying records;

b) transferring a copy of the identifying records to the trusted third party;

c) associating, by the trusted third party, each of the identifying records with a unique identifier, wherein a respectively different unique identifier is assigned to each person identified by one or more of the identifying records;

d) transferring, by the trusted third party, the unique identifiers to the data provider;

e) associating, by the data provider, the other data fields with the respective unique identifiers to form depersonalized data; and

f) transferring, by each of the data providers, the depersonalized data to the data user.

10. A carrier according to claim 9 wherein the step of associating the identifying records by the trusted third part includes the step of generating a random identifier that cannot be used to recover any of the identifying information fields as the unique identifier.

11. A carrier containing a set of instructions for causing a network of general purpose computers comprising a plurality of data providers, a data user and a trusted third party, said network accessing a plurality of data records which include identifying information and other fields, wherein the identifying information in each data record identifies a person, to perform the following steps:

a) separating, by each of the data providers, the identifying information fields from the other data fields for each data record to generate identifying records;

b) transferring, by each of the data providers, a copy of the identifying records to the trusted third party;

c) associating, by the trusted third party, each of the identifying records, with a unique identifier, wherein a respectively different unique identifier is assigned to each individual person identified by one or more of the identifying records;

d) transferring, by the trusted third party, the unique identifiers to the respective data providers from which the identifying records used to generate the unique identifiers were received;

e) associating, by each of the data providers, the other data fields with the respective unique identifiers to form depersonalized data; and

f) transferring, by each of the data providers, the depersonalized data to the data user.

12. A carrier according to claim 11 wherein the step of associating, by the trusted third party, each of the identifying records, with a unique identifier, includes the step of generating a random identifier that cannot be used to recover any of the identifying information fields as the unique identifier, wherein when the identifying information fields provided by more than one of the plurality of data providers corresponds to one person, respectively different unique identifiers are generated for each of the more than one information providers.

13. A carrier containing a set of instructions for causing a network of general purpose computers, said network comprising a plurality of data providers, a data user and a trusted third party, said network accessing a plurality of data records which include identifying information fields and other data fields, wherein the identifying information in each data record identifies a person, to perform a method comprising the steps of:

a) generating, by each of the data providers, a plurality of first unique identifiers from the identifying information fields of the plurality of data records;

b) transferring, by each of the data providers, a copy of the identifying information fields from each of the plurality data records and a respective copy of each of the plurality of unique identifiers, as a respective plurality of identifying records, to the trusted third party;

c) transferring, by each of the data providers, a copy of the other data fields from each of the plurality data records and a respective copy of each of the plurality of first unique identifiers, as a respective plurality of data records, to the data user;

d) associating, by the trusted third party, each of the identifying records, with a second unique identifier, wherein a respectively different second unique identifier is assigned to each individual person identified by one or more of the identifying records;

e) transferring, by the trusted third party, the first unique identifiers and the second unique identifiers to the data user; and

f) associating, by the data user, the other data records provided by the data provider with the unique identifiers provided by the trusted third party.

14. The carrier of claim 13 further comprising instructions to perform the steps of matching records associated with a particular person among the identifying records provided by the plurality of data providers, to generate the second unique identifier which is the same for all identifying records provided by the plurality of data providers, wherein the matching is performed by the trusted third party.

15. A carrier containing a set of instructions for causing a general purpose computer accessing a plurality of data records, wherein each of the plurality of data records contains information used to identify a person, by a trusted third party, to perform the steps of:

a) receiving a plurality of identifying records from a first data provider;

b) associating each of the plurality of identifying records with a unique identifier, wherein a respectively different unique identifier is assigned to each person identified by one or more of the plurality of identifying records; and

c) transferring the unique identifiers to the data provider.

16. A carrier according to claim 15 wherein the step of associating the identifying records includes the step of generating a random identifier that cannot be used to recover any of a plurality of identifying information fields as the unique identifier.

17. A carrier containing a set of instruction for causing a general purpose computer accessing a plurality of data records wherein each of the plurality of data records contains information used to identify a person by a trusted third party, to perform the steps of:

a) receiving, from a plurality of data providers, a copy of the plurality of identifying records;

b) associating each of the identifying records, with a unique identifier, wherein a respectively different unique identifier is assigned to each individual person identified by one or more of the identifying records;

c) matching records associated with a particular person among the identifying records provided by the plurality of data providers, to generate the second unique identifier which is the same for all identifying records provided by the plurality of data providers; and

d) transferring the unique identifiers to the respective data providers from which the identifying records used to generate the unique identifiers were received.

18. A carrier according to claim 17 wherein the step of associating, by the trusted third party, each of the identifying records, with a unique identifier, includes the step of generating a random identifier that cannot be used to recover any of the identifying information fields as the unique identifier, wherein when the identifying information fields provided by more than one of the plurality of data providers corresponds to one person, respectively different unique identifiers are generated for each of the more than one information providers.

Figure 1

**DATA PROVIDER**  112  113

**THIRD PARTY**  116

**DATA USER**  118

111

IDENTIFYING DATA

INPUT DATA

115

TTP DATABASE

113

IDENTIFYING DATA

120

DEPERSONALIZED DATA

120

DEPERSONALIZED DATA

110

Figure 2

Figure 3

DATA SUPPLIER

RANDOM IDENTIFIER CREATION

IDENTIFYING DATA

DATA SUPPLIER INFORMATION

DEPERSONALIZED DATA

TRUSTED THIRD PARTY

DEPERSONALIZING PROCESS

DATA USER

DATA ANALYSIS

Figure 4

DATA SUPPLIER

*112*

RANDOM IDENTIFIER CREATION

TRUSTED THIRD PARTY

*116*

DEPERSONALIZING PROCESS

*111*

*113*

IDENTIFYING DATA

DATA SUPPLIER INFORMATION

*410*

DATA USER

*118*

*120*

DEPERSONALIZED DATA

DATA ANALYSIS

Figure 5

Figure 6

Figure 7

FIG 7

Figure 8

```
PROVIDE DEPERSONALIZING        810
PROCESS TO DATA PROVIDERS
            ↓
EXTRACT IDENTIFYING            812
DATA AND PROVIDE TO
DEPERSONALIZING PROCESS
            ↓
GENERATE UNIQUE               814
IDENTIFIERS AND USE TO
REPLACE IDENTIFYING DATA
IN PROVIDER DATABASE
            ↓
SEND DEPERSONALIZED           816
DATA TO DATA USERS
            ↓
SEND UNIQUE                   818
IDENTIFIERS TO TTP
            ↓
STORE                         820
UNIQUE IDENTIFIERS;
SEND CORRELATING
DATA TO DATA USERS
            ↓
LINK RECORDS;                 822
PERFORM DATA ANALYSIS
```

Figure 9

```
┌─────────────────────────────┐
│ PROVIDERS EXTRACT IDENTIFYING │ ─ 910
│ INFORMATION FROM DATABASES   │
└─────────────────────────────┘
              │
              ▼
┌─────────────────────────────┐
│     SEND IDENTIFYING DATA    │ ─ 912
│          TO TTP              │
└─────────────────────────────┘
              │
              ▼
┌─────────────────────────────┐
│    TTP MATCHES IDENTIFYING   │ ─ 914
│   DATA FROM PROVIDERS AND    │
│   ASSIGNS UNIQUE IDENTIFIERS │
└─────────────────────────────┘
              │
              ▼
┌─────────────────────────────┐
│   TTP SENDS DATA WITH UNIQUE │ ─ 916
│  IDENTIFIERS BACK TO PROVIDERS│
└─────────────────────────────┘
              │
              ▼
┌─────────────────────────────┐
│    PROVIDERS PREPARE DATA    │ ─ 918
│    TO SEND TO DATA USERS;    │
│  REPLACE IDENTIFYING DATA WITH│
│       UNIQUE IDENTIFIER      │
└─────────────────────────────┘
              │
              ▼
┌─────────────────────────────┐
│      DATA USERS OBTAIN       │ ─ 920
│  CORRELATING DATA FROM TTP   │
└─────────────────────────────┘
              │
              ▼
┌─────────────────────────────┐
│    DATA USERS LINK DATA      │ ─ 922
│   FROM PROVIDERS AND         │
│     PERFORM ANALYSIS         │
└─────────────────────────────┘
```